# EUROPÄISCHE PATENTSCHRIFT

(11) **EP 2 168 845 B1**
(45) Veröffentlichungstag und Bekanntmachung des Hinweises auf die Patenterteilung: **02.11.2011**
(21) Anmeldenummer: 09171088.9
(22) Anmeldetag: 23.09.2009
(51) Int. Cl.: B62D 24/04, F16B 5/02, F16F 1/38, F16F 1/44, B62D 24/02, B62D 27/04

(54) **Verbindungselement für eine elastische Verbindung zweier Bauteile**
Connecting element for an elastic connection between two components
Elément de liaison pour un raccordement entre deux composants

(30) Priorität: 25.09.2008 DE 102008048971; 02.07.2009 DE 102009033001
(43) Veröffentlichungstag der Anmeldung: 31.03.2010
(73) Patentinhaber: Westrick, Ludger, 46342 Velen-Ramsdorf (DE)
(72) Erfinder: Westrick, Ludger, 46342 Velen-Ramsdorf (DE)
(74) Vertreter: Linnemann, Winfried

(56) Entgegenhaltungen:
- EP-A2- 1 136 346
- WO-A2-01/13005
- DE-U1- 29 709 250
- GB-A- 1 530 312

## Beschreibung

Die Erfindung betrifft ein Verbindungselement für eine elastische Verbindung zweier Bauteile mit zwei einander gegenüberliegenden Bauteilbereichen miteinander, wobei diese mittels eines Befestigungselements miteinander verbindbar sind, und mit wenigstens einem das Befestigungselement auf einem Teil seiner Länge umgebenden, zwischen einem Kopf des Befestigungselements und dem diesem zugewandten Bauteilbereich angeordneten elastischen Zwischenglied, das ein aus einem elastisch-flexiblen, festen Material bestehendes Medium ist, das von wenigstens einer Umhüllung in seiner Axialrichtung eingeschlossen oder vorgespannt und an seinem Außenumfang umgeben ist, wobei im montierten Zustand des Verbindungselements durch auftretende Kräfte, die die beiden Bauteile relativ zueinander bewegen, das Medium unter Bewegungsdämpfung in seiner Axialrichtung stauchbar und in seiner Radialrichtung nach außen ausdehnbar ist.

Ein Verbindungselement der vorstehend genannten Art ist aus EP 1 136 346 A2 bekannt. Dort wird als elastisches Zwischenglied ein aus einem elastisch-flexiblen, inkompressiblen oder gering kompressiblen Material bestehender Körper verwendet, der von einer starren Hülse an seinem Außenumfang umgeben ist. Im montierten Zustand des Verbindungselements ist der Körper unter Bewegungsdämpfung in seiner Axialrichtung stauchbar und in seiner Radialrichtung nach außen in einem durch den Innendurchmesser der Hülse begrenzten Maß ausdehnbar. Diese durch den Innendurchmesser der starren Hülse begrenzte radiale Ausdehnung führt zu einem relativ harten Anschlag des Verbindungselementes bei seiner Beanspruchung.

Für die vorliegende Anmeldung stellt sich daher die Aufgabe, das Verbindungselement der vorstehend genannten Art hinsichtlich seiner Eigenschaften zu verbessern und insbesondere einen vergrößerten Federweg und einen weniger harten Endanschlag sowie vielfältigere Variations- und Beeinflussungsmöglichkeiten zur Verfügung zu stellen.

Die Lösung der Aufgabe gelingt erfindungsgemäß mit einem Verbindungselement der eingangs genannten Art, das **dadurch gekennzeichnet ist, dass** die Umhüllung aus elastisch-flexiblem Material und federnden Geometrien besteht und dass durch eine auf das feste, flexible Medium ausgeübte Druckkraft, die eine Umformung des Mediums bewirkt, die umhüllenden Geometrien rückstellbar federnd verformbar sind.

Erfindungswesentlich sind bei dem neuen Verbindungselement weitere federnde Elemente vorgesehen, nämlich die das flexible Medium umgebenden Geometrien. Somit trägt bei dem erfindungsgemäßen Verbindungselement nicht nur das feste, elastisch-flexible Medium sondern auch mindestens ein weiteres Teil des Verbindungselementes zu den Federeigenschaften bei. Dieses weitere Teil ist die Umhüllung des Mediums, die durch die Umformung des Mediums ebenfalls umgeformt wird, wobei die Umhüllung so ausgebildet ist, dass sie keine dauerhafte Verformung erleidet, sondern innerhalb ihres elastischen Umformbereichs verformt wird, sich also bei Wegfallen der Belastung zurückstellt. Das erfindungsgemäße Verbindungselement enthält somit mindestens zwei oder auch noch mehr federnde Teile, deren Federwirkungen sich überlagern und die im Vergleich zum Stand der Technik einen vergrößerten Federweg mit einem weniger harten Endanschlag erlauben und die vielfältige Möglichkeiten zur Veränderung und Beeinflussung der Federungseigenschaften bieten.

Bevorzugte Ausgestaltungen und Weiterbildungen des erfindungsgemäßen Verbindungselements sind in den abhängigen Ansprüchen und in der nachfolgenden Beschreibung angegeben.

Vorzugsweise besteht die Umhüllung umfangsseitig aus einer Hülse und stirnseitig aus einer Scheibe, wobei vorzugsweise die Hülse becherförmig mit einem Boden mit einer Durchbrechung für das Befestigungselement ausgeführt ist. Alternativ kann statt des Bodens auch eine separate weitere Scheibe vorgesehen sein. Die Hülse und die Scheibe sind technisch relativ einfache und dadurch kostengünstige und zuverlässige Bauteile, die zugleich mit relativ geringem Aufwand mit den gewünschten elastisch-flexiblen und/oder federnden Eigenschaften versehen werden können. Um nicht nur den Umfang der Hülse für die Erzeugung einer Federwirkung zu nutzen, ist weiter bevorzugt vorgesehen, dass der Boden und/oder eine diesem entgegengesetzte Geometrie oder Scheibe im entspannten Zustand des Mediums vorgebogen ist. Bei Belastung des Mediums im Einsatz des Verbindungselements bewirkt dann die Verformung des Mediums eine federnde Verformung des Bodens und/oder der diesem entgegensetzten Geometrie oder Scheibe, so dass auch diese Teile in die Erzeugung der Federwirkung einbezogen sind.

Bevorzugt bestehen die Hülse und/oder die Scheibe aus Federstahl, da dieses Material die gewünschten Eigenschaften in besonders günstiger Weise erfüllt.

Eine weitere Federwirkung kann dadurch erzielt werden, dass zwischen dem Außenumfang des Mediums und dem Innenumfang der Hülse ein federndes Element angeordnet ist.

Aus dem gleichen Grund wird vorgeschlagen, dass zwischen dem Boden der Hülse und/oder der entgegengesetzten Geometrie oder Scheibe einerseits und dem Medium andererseits mindestens ein federndes Element angeordnet ist. Auf diese Weise können weitere federnde Teile dem Verbindungselement hinzugefügt werden, was den erreichbaren Federweg bei kompakter Bauweise weiter vergrößert.

Aus Gründen einer einfachen Montage ist bevorzugterweise das Befestigungselement eine durch zwei Bohrungen in den Bauteilbereichen verlaufende Schraube mit einer Mutter.

Um auch das Befestigungselement für die Erzeugung der gewünschten Federwirkung zu nutzen, kann die Mutter im montierten Zustand des Verbindungselements mit einer weiteren, federnden Scheibe unterlegt sein.

In einer einfachen Ausgestaltung kann das Medium an seinem Außenumfang glattflächig sein. Falls ein weicheres Ansprechen des Verbindungselements gewünscht wird, kann das Medium an seinem Außenumfang axial und/oder in Umfangsrichtung und/oder schräg verlaufende Nuten und/oder Wippen aufweisen.

In einer ersten Ausgestaltung kann das Medium einfach eine Außenkontur aufweisen, die der Innenkontur der Umhüllung in unbelastetem Zustand entspricht. Um die Feder- und Dämpfungseigenschaften des Verbindungselements in gewünschter Weise beeinflussen zu können, kann das Medium auch eine davon abweichende Kontur aufweisen. Insbesondere ist dabei vorgesehen, dass das Medium an seinem Außenumfang konisch oder tailliert oder ballig geformt ist.

Hinsichtlich der Verwendung des erfindungsgemäßen Verbindungselementes ist bevorzugt vorgesehen, dass es eine elastische Verbindung eines Fahrzeugaufbaus mit einem Fahrgestell bildet.

Weiter schlägt die Erfindung vor, dass die Umhüllung aus wenigstens einer Hülse mit einem Boden mit einer Durchbrechung für das Befestigungselement besteht und dass eine Hülsenumfangswand mindestens einen in Axialrichtung des Verbindungselements laufenden Trennschlitz aufweist. Mit einem oder mehreren Trennschlitzen kann das Federverhalten der Hülse beeinflusst und in einer gewünschten Weise festgelegt werden. Dabei bleibt die Hülse technisch einfach und auch Änderungen sind einfach durchführbar, sodass z. B. mittels relativ einfacher Versuche eine gewünschte und für einen bestimmten Einsatzfall geeignete Charakteristik des federnden Verhaltens der Hülse gefunden und festgelegt werden kann. Dabei kann das Verhalten der Hülse insbesondere durch Variation von Länge, Breite und Dichte der Trennschlitze beeinflusst werden.

In weiterer Ausgestaltung ist vorgesehen, dass zwei Hülsen ineinander angeordnet sind. Hiermit kann insbesondere eine härtere Federwirkung einfach erzielt werden.

Um das in der inneren Hülse angeordnete flexible Medium gegen einen schädlichen Durchtritt durch die Trennschlitze nach außen zu hindern, sind bevorzugt die beiden Hülsen in ihrer Umfangsrichtung gegeneinander in eine nicht deckungsgleiche Lage der Trennschlitze verdreht.

Als weitere Maßnahme gegen Beschädigungen des flexiblen Mediums ist vorgesehen, dass zwischen dem Medium und der Hülse oder der Hülsenumfangswand eine Mediumschutzhülle aus elastisch-flexiblem Material angeordnet ist. Die Mediumschutzhülle kann die Bewegungen des flexiblen Mediums zwar mitmachen, verhindert aber einen schädlichen Eintritt des Mediums in die Trennschlitze.

Bei zwei ineinander angeordneten Hülsen tritt im Einsatz des Verbindungselements zwangsläufig eine gegenseitige Reibung auf, die zu versachleiß führt. Um diesen Verschleiß zu vermeiden oder zu vermindern, wird vorgeschlagen, dass zwischen den beiden Hülsen oder zwischen deren Hülsenumfangswänden eine reibungsmindernde Zwischenlage aus einem elastisch-flexiblen Material angeordnet ist.

Damit die Mediumschutzhülle oder Zwischenlage ihre zugedachten Funktionen sicher und lange erfüllen können, besitzt zweckmäßig die Mediumschutzhülle oder Zwischenlage eine geringere Flexibilität als das Medium. Somit wird insbesondere vermieden, dass die Mediumschutzhülle oder Zwischenlage unter Beschädigung in den oder die Trennschlitze eintritt.

Eine weitere Möglichkeit zur Beeinflussung des Verhaltens der Hülse kann dadurch erreicht werden, dass auf den Außenumfang der Hülsenumfangswand mindestens ein Haltering aufgesetzt ist. Der Haltering begrenzt zumindest in dem Bereich, in dem er angeordnet ist, radiale Aufweitbewegungen der Hülsenumfangswand.

Um den Haltering als federnde Geometrie mit zu nutzen, wird vorgeschlagen, dass der Haltering ein hinsichtlich seines Ringdurchmessers federnder Ring ist.

Eine weitere Ausgestaltung des Verbindungselementes sieht vor, dass der/ein Haltering an oder nahe dem vom Boden entfernten Stirnende der Hülsenumfangswand in Axialrichtung der Hülse fest angebracht ist. Mit dem Haltering an dieser Anbringungsstelle wird insbesondere das freie Ende der Hülsenumfangswand gegen ein irreversibles Aufweiten oder Aufreißen bei extremer Belastung geschützt.

Der Haltering kann auch dazu genutzt werden, die Charakteristik des Verbindungselementes zu beeinflussen. Hierzu ist vorgesehen, dass der/ein Haltering in Axialrichtung der Hülse verstellbar an der Hülsenumfangswand angebracht ist.

Damit die Hülse bei ausreichender Dauerhaltbarkeit und hoher mechanischer Belastbarkeit die gewünschte federnde Geometrie bilden kann, besteht die Hülse zweckmäßig aus Federstahl.

Vorzugsweise ist der Federstahl ein Stahl nach DIN EN 10888-2 oder 10089 oder 10132-1 oder 10132-4.

Der Federstahl kann auch ein Stahl der Bezeichnung X10CrNi18-8 oder 38Si7 oder 61SiCr7 oder 52CrMoV4 oder 51CrV4 sein.

Um das Verbindungselement wirtschaftlich fertigen zu können, ist vorzugsweise die Hülse aus einer sternförmigen Platine mit zunächst radialen, nach oben umgebogenen, die Hülsenumfangswand bildenden Armen gebildet. Die Hülse kann so günstig in einem automatisierten Stanz- und Biegeprozess gefertigt werden.

Im Hinblick auf eine günstige Fertigung besteht eine alternative Ausführung darin, dass die Hülsenumfangswand eine zunächst geschlossene und zur Bildung des mindestens einen Trennschlitzes nachträglich geschlitzte Wand ist.

Für ein eher weiches Verbindungselement läuft gemäß einer Weiterbildung der mindestens eine Trennschlitz über die gesamte Höhe der Hülsenumfangswand.

Wenn ein eher hartes Verbindungselement gewünscht wird, dann ist bevorzugt vorgesehen, dass der mindestens eine Trennschlitz über einen Teil der Höhe der Hülsenumfangswand läuft.

Die Charakteristik des Verbindungselementes kann weiterhin dadurch beeinflusst werden, dass wahlweise der mindestens eine Trennschlitz von einem oberen Ende oder von einem unteren Ende oder vom oberen und unteren Ende der Hülsenumfangswand beabstandet ist.

Alternativ oder zusätzlich zu dem mindestens einen Trennschlitz können erfindungsgemäß in der Hülsenumfangswand und/oder im Boden ein oder mehrere Aussparungen oder Ausschnitte angebracht sein. Solche Aussparungen oder Ausschnitte sind ebenfalls zur Beeinflussung der Charakteristik des Verbindungselementes geeignet und können z. B. mittels eines Stanz- oder Schneidprozesses hergestellt sein.

In vielen Fällen stellt eine einstückige Hülse die am günstigsten zu fertigende Ausführung dar. In besonderen Anwendungsfällen kann es aber auch vorteilhaft sein, wenn die Umhüllung aus wenigstens einer Hülse mit einer Hülsenumfangswand und mit einem Boden mit einer Durchbrechung für das Befestigungselement besteht und die Hülsenumfangswand und der Boden zwei separate Einzelteile sind, die in Axialrichtung der Hülse miteinander fest und in Radialrichtung der Hülse relativ zueinander beweglich verbunden sind. Bei dieser Ausführung kann die Hülsenunfangswand weitgehend unbehindert von dem Hülsenboden Federbewegungen in Radialrichtung des Verbindungselementes ausführen, wogegen Relativbewegungen zwischen dem Boden und der Hülsenumfangswand in Axialrichtung des Verbindungselementes unterbunden sind.

Eine konkrete Weiterbildung schlägt dazu vor, dass die Hülsenumfangswand an ihrem unteren Ende mindestens zwei über ihren Umfang verteilt angeordnete, radial nach außen oder innen weisende Laschen aufweist, die mit radialem Bewegungsspiel in lagegerecht im Boden angebrachte Führungsschlitze eingreifen.

Zur Begünstigung der gewünschten federnden Eigenschaften der Hülse hat diese vorzugsweise einen mehreckigen Umriss. Dabei ist ein vier- bis zwölfeckiger Umriss besonders bevorzugt.

Die Hülse kann selbstverständlich auch einen runden oder ovalen oder elliptischen Umriss aufweisen.

Bei einer weiteren Ausgestaltung ist vorgesehen, dass die Umhüllung aus wenigstens einer Hülse mit einem Boden mit einer Durchbrechung für das Befestigungselement besteht und dass die gesamte Hülse oder eine Hülsenumfangswand aus einem Fasergewebe gebildet ist. Auch mit einem Fasergewebe kann eine Hülse oder Hülsenumfangswand mit federnden Eigenschaften hergestellt werden, wobei durch Wahl des Fasermaterials, der Faserstärke und der Art des Gewebes die federnden Eigenschaften der Hülse oder Hülsenumfangswand in vorteilhaft weiten Bereichen variiert werden können.

Gut geeignet sind z. B. Fasergewebe aus Metall- oder Karbon- oder Kunststofffasern oder aus einer Mischung aus zwei oder drei dieser Fasern.

Im Folgenden werden Ausführungsbeispiele der Erfindung anhand einer Zeichnung erläutert. Die Figuren der Zeichnung zeigen:
- Figur 1: ein Verbindungselement in eingebautem Zustand ohne Belastung,
- Figur 2: das Verbindungselement in eingebautem Zustand unter Belastung,
- Figur 3 bis 24: verschiedene Ausführungen einer einen Teil des Verbindungsele- mentes bildenden Hülse jeweils von oben nach unten gesehen in Längsschnitt, in Seitenansicht und in Draufsicht,
- Figur 25: eine Platine als Vorprodukt einer Hülse, in Draufsicht,
- Figur 26: eine aus der Platine gemäß Figur 25 hergestellte Hülse in Drauf- sicht,
- Figur 27: eine Doppel-Hülse, wieder in Draufsicht,
- Figur 28: die Hülse aus Figur 26 in Seitenansicht,
- Figur 29: einen Auschnitt aus einer zweiten Doppel-Hülse in Draufsicht,
- Figur 30: eine weitere Hülse in Seitenansicht,
- Figur 31: eine Hülse in einer weiteren Ausführung, in Seitenansicht, und
- Figur 32: eine letzte Ausführung der Hülse, in Seitenansicht.

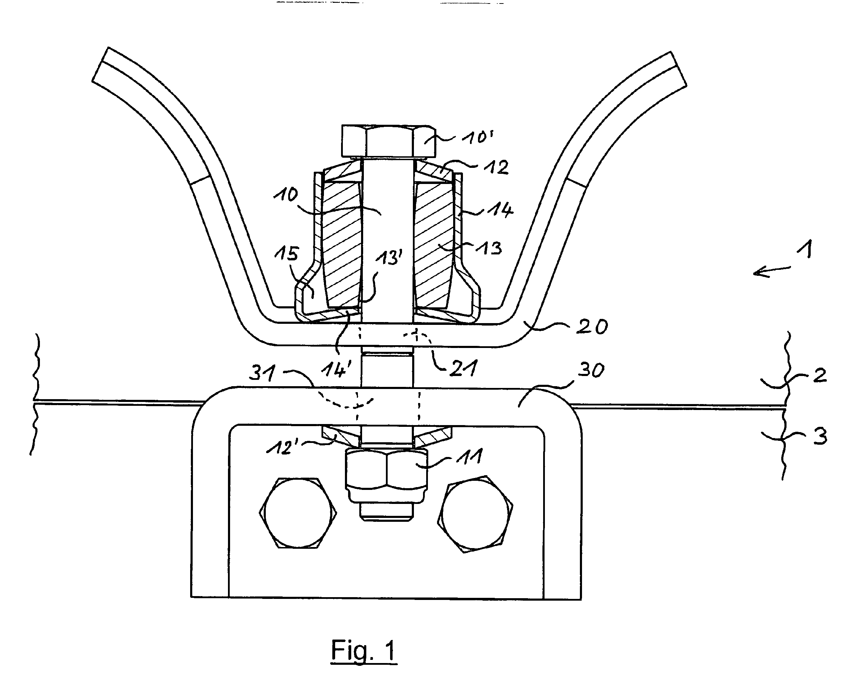

Figur 1 der Zeichnung zeigt ein Verbindungselement 1 in eingebautem Zustand, in dem es Bauteile 2, 3 miteinander verbindet, die im Hintergrund nur auschnittsweise angedeutet sind. Bei den Bauteilen 2, 3 kann es sich beispielsweise um Längsträger eines Aufbaurahmens und eines Fahrzeugrahmens handeln. Mit den Bauteilen 2, 3 ist jeweils eine Konsole fest verbunden, die zwei einander gegenüberliegende Bauteilbereiche 20, 30 bilden. Durch jeden Bauteilbereich 20, 30 verläuft eine Bohrung 21, 31, die miteinander fluchten.

Auf die nach oben weisende Seite des oberen Bauteilbereichs 20 ist eine becherförmige Hülse 14 mit einem eine zentrale Durchbrechung aufweisenden Boden 14' aufgesetzt. In der Hülse 14 ist ein elastisch-flexibles, festes Medium 13 angeordnet, wobei die Hülse 14 in dem hier vorliegenden unbelasteten Zustand des Mediums 13 dieses unter Freilassung eines Luftspalts 15 umgibt. Das Medium 13 besitzt eine zentrale Durchbrechung 13', die mit den beiden Bohrungen 21, 31 und mit der Durchbrechung im Boden 14' fluchtet.

Durch die Durchbrechung 13' und die Durchbrechung im Boden 14' und die Bohrungen 21, 31 verläuft ein Befestigungselement in Form einer Schraube 10. Die Schraube 10 besitzt oben einen Kopf 10', der unter Zwischenlage einer Unterlegscheibe 12 an der nach oben weisenden Stirnseite des Mediums 13 anliegt. Das untere Ende der Schraube 10 ragt durch die Bohrung 31 im unteren Bauteilbereich 30 nach unten vor. Hier ist unter Zwischenlage einer weiteren Scheibe 12' eine Mutter 11 auf die Schraube aufgeschraubt und auf diese Art gegen Losdrehen gesichert. Das Medium 13 ist also allseitig von einer Umhüllung umgeben. Bei Bedarf kann das Medium 13 durch entsprechendes Anziehen von Schraube 10 und Mutter 11 auch vorgespannt werden.

Solange keine äußeren Belastungen auftreten, liegen die beiden Bauteile 2, 3 aneinander an und werden in dieser Lage durch das Verbindungselement 1 gehalten. Je nach Größe der Bauteile 2, 3 können selbstverständlich auch mehrere Verbindungselemente 1 vorgesehen sein.

Die Hülse 14 ist so gestaltet, dass sie federnde Eigenschaften hat, wobei die federnden Eigenschaften dadurch erzielt werden, dass zum einen die Hülse 14 in Radialrichtung federnd und rückstellbar aufweitbar ist und zum anderen der Boden 14'aus seiner in Figur 1 sichtbaren, nach oben vorgebogenen Stellung axial nach außen rückstellbar ausfedern kann. Weiterhin ist die Scheibe 12 unter dem Kopf 10' der Schraube 10 als Federscheibe ausgebildet. Auch die weitere Scheibe 12' zwischen der Mutter 11 und dem Bauteilbereich 30 ist eine Federscheibe.

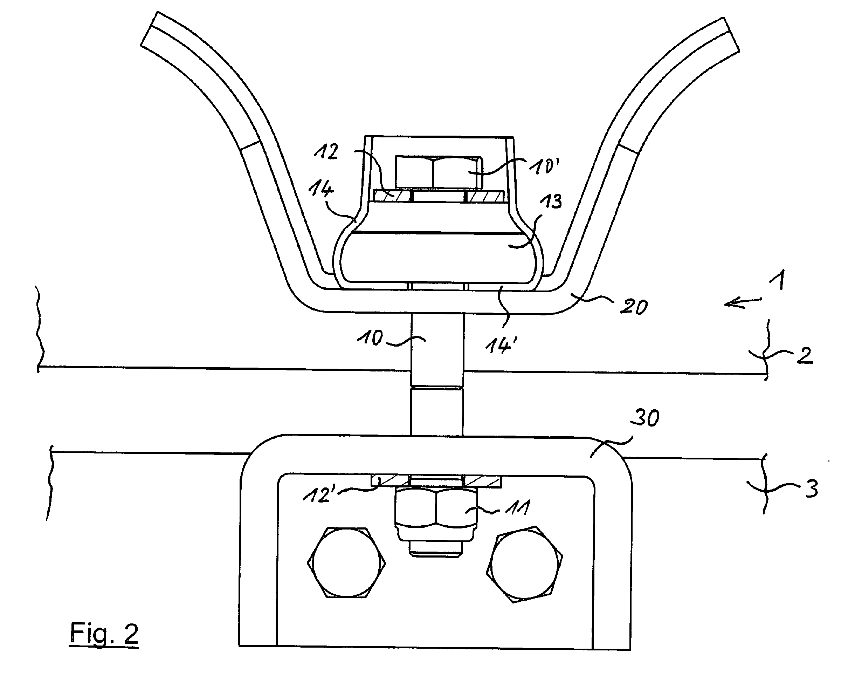

Bei einer Belastung der Bauteile 2, 3, die zu einer Bewegung dieser Bauteile 2, 3 voneinander weg führt, ergibt sich der in Figur 2 gezeigte Zustand des Verbindungselements 1. Zusammen mit den Bauteilen 2, 3 bewegen sich auch die jeweils zugehörigen Bauteilbereiche 20 und 30 voneinander weg, was zu einer axialen Bewegung des Schraubenkopfes 10' mit der zugehörigen Scheibe 12 relativ zu dem Medium 13 führt, wodurch das Medium 13 in Axialrichtung mit einer Druckkraft beaufschlagt wird. Diese Druckkraft führt zu einer mehrdimensionalen Verformung des Mediums 13, wodurch auf den Innenumfang und den Boden 14' der Hülse 14 Kräfte ausgeübt werden, die zu einer Federwirkung durch Verformung der Hülse 14 radial nach außen und axial nach unten führen. Diese Verformungen der Hülse 14 liegen im elastischen Bereich, so dass eine selbsttätige Rückstellung erfolgt. Somit hat das Verbindungselement 1 eine mehrfache Federwirkung, nämlich zum einen durch das elastisch-flexible, feste Medium 13 und durch die ebenfalls federnd ausgebildete Hülse 14. Auch die Scheiben 12 und 12' tragen zu der Federwirkung bei.

Wesentlich ist, dass die Umhüllung des Mediums 13, konkret die Hülse 14, so gestaltet ist, dass sie in der Lage ist, aus einem entspannten Zustand in einen ausgeweiteten Zustand überführt zu werden, aus dem sie elastisch-flexibel rückstellbar ist. Hierzu ist entweder die Hülse 14 aus einem in sich elastisch-flexiblen Material gebildet oder mit elastisch-flexiblen Geometrien gestaltet.

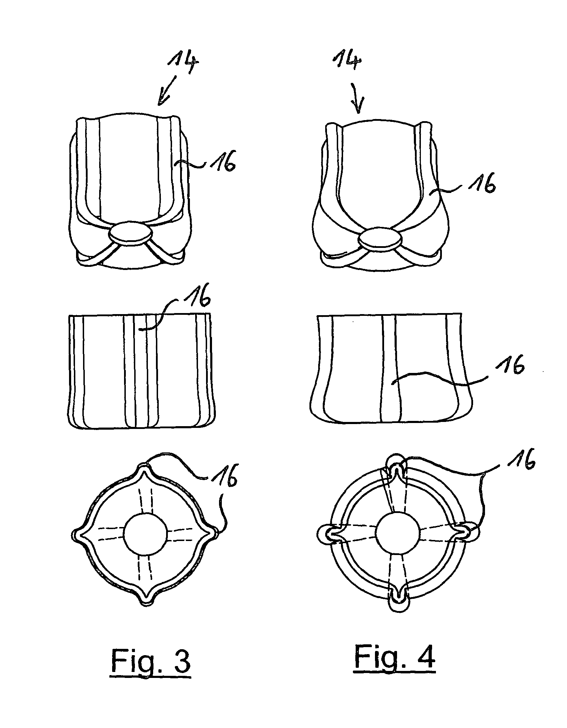

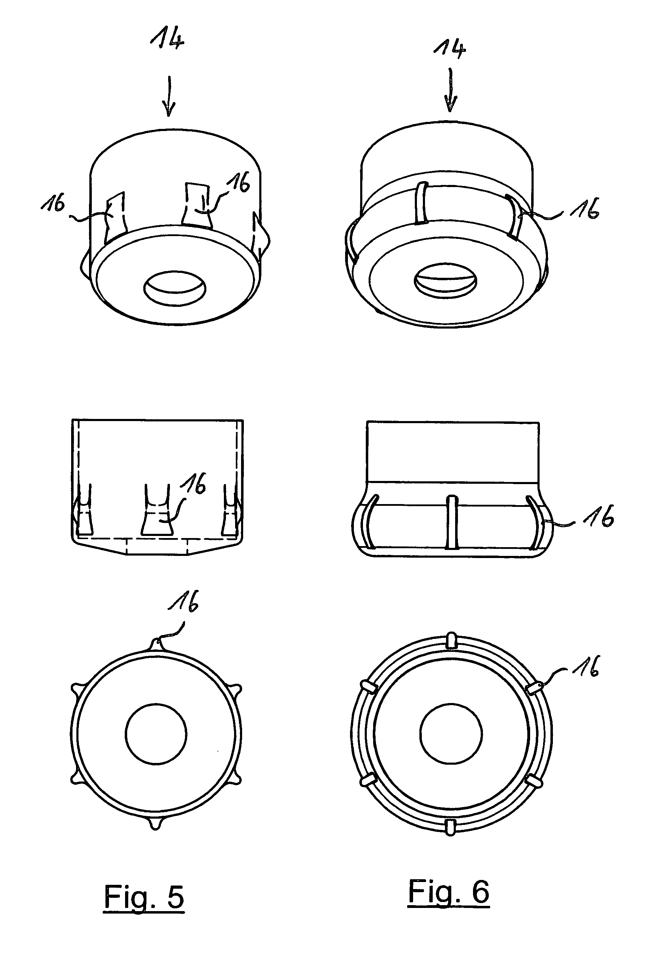

Beispiele für derartige mögliche Gestaltungen der Hülse 14 sind in den Figuren 3 bis 24 der Zeichnung beispielhaft dargestellt. Dabei ist in jeder Figur dieselbe Hülse 14 jeweils in unterschiedlichen Darstellungen gezeigt.

In den Figuren 3 bis 6 ist die Hülse 14 oben in perspektivischer Ansicht, in der Mitte in Seitenansicht und unten in Draufsicht gezeigt. Charakteristisch für diese Hülsen 14 sind Dehnungsfalten 16, die die gewünschte federnde Eigenschaft der Hülse 14 zur Verfügung stellen.

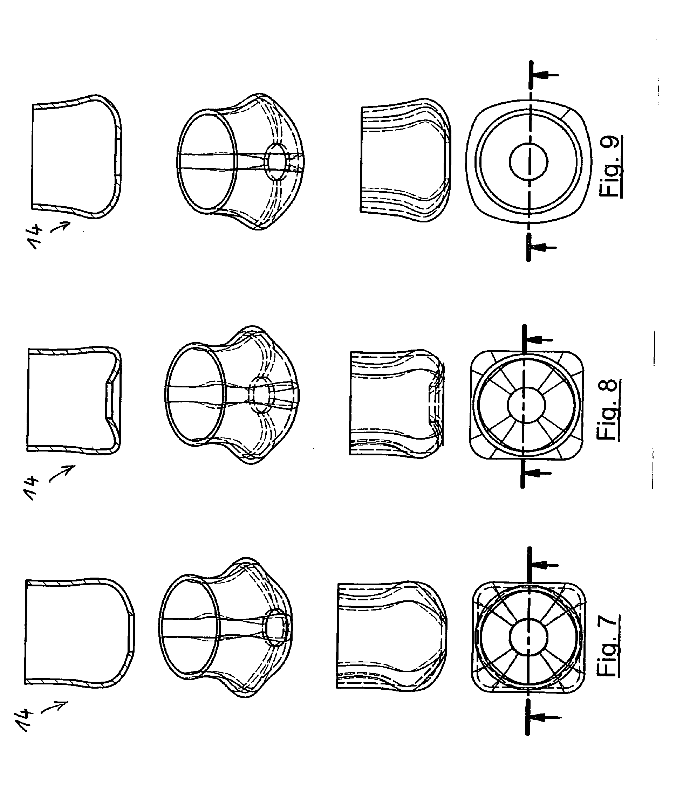

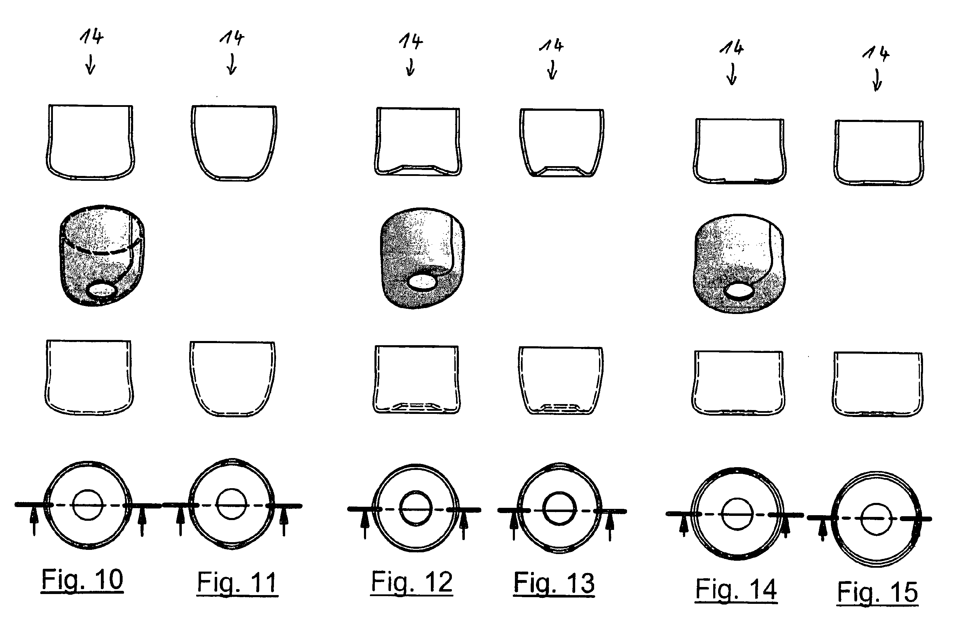

Die Figuren 7 bis 17 zeigen in jeweils vier verschiedenen Darstellungen, von oben nach unten im Längsschnitt, in perspektivischer Ansicht, in Seitenansicht und in Draufsicht weitere Ausführungen der Hülse 14, die hier durch unterschiedliche Gestaltungen ihres Umrisses die gewünschten Federeigenschaften besitzt. Auch der Boden ist in die Federeigenschaften einbezogen, was bei den Beispielen gemäß Figur 8 und gemäß Figur 12 und 13 der Fall ist.

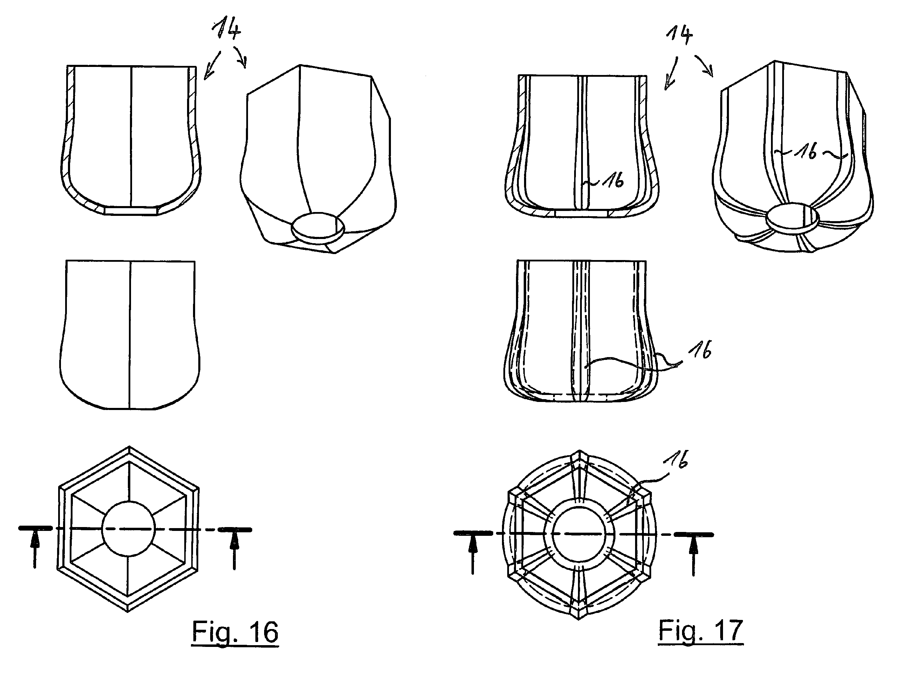

Die Figuren 16 und 17 zeigen Hülsen 14 wieder in verschiedenen Ansichten, oben links jeweils im Längsschnitt und in perspektivischer Ansicht, in der Mitte in Seitenansicht und unten in Draufsicht. Die Hülsen 14 gemäß den Figuren 16 und 17 haben einen im Wesentlichen sechseckigen Umriss. Die Hülse 14 gemäß Figur 17 ist zudem mit Dehnungsfalten 16, die in Axialrichtung verlaufen, versehen.

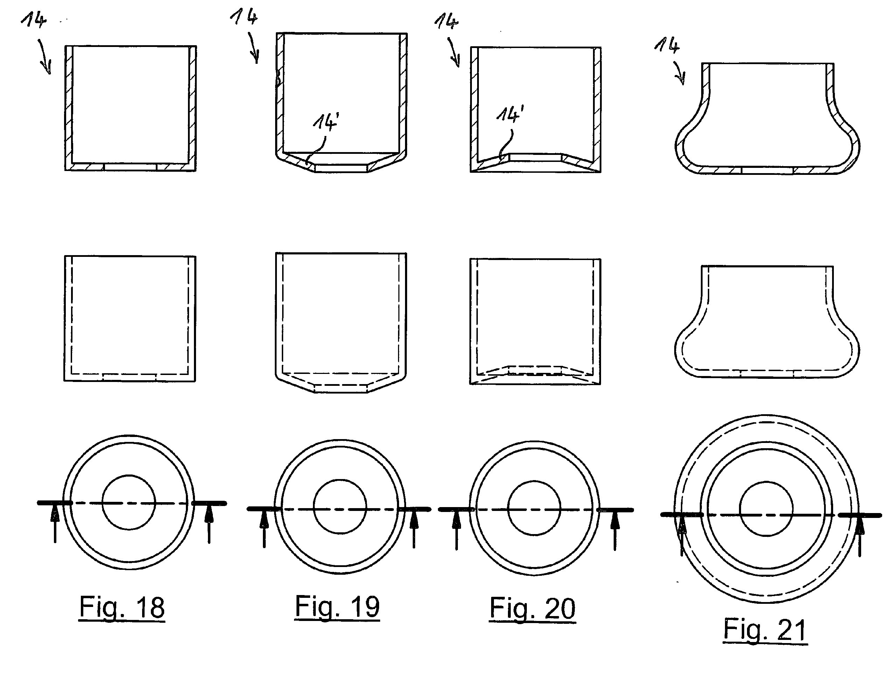

Die Figur 18 zeigt oben im Längsschnitt, in der Mitte in Seitenansicht und unten in Draufsicht eine Hülse 14, die selbst aus einem elastisch-flexiblen, federnden Material besteht. Die Hülse 14 hat hier deshalb eine kreisrunde Form, weil sie in der Lage ist, sich in sich aufzuweiten, da das Material der Hülse dies hier zulässt.

Die Figuren 19 und 20 zeigen in gleicher Darstellungsweise wie die Figur 18 zwei weitere Hülsen 14, bei denen der Boden 14' federnd ausgebildet ist.

In Figur 21 ist eine Hülse 14 in belastetem Zustand des Verbindungselementes gezeigt, wobei sichtbar ist, dass bei axialer Belastung des hier nicht eigens eingezeichneten Mediums sich eine radiale Aufweitung der Hülse 14 in ihrem unteren Bereich ausbildet. Da das Material der Hülse 14 hier elastisch-flexibel ist, stellt sich die Hülse 14 nach Wegfall der Belastung in ihre Ausgangsform zurück.

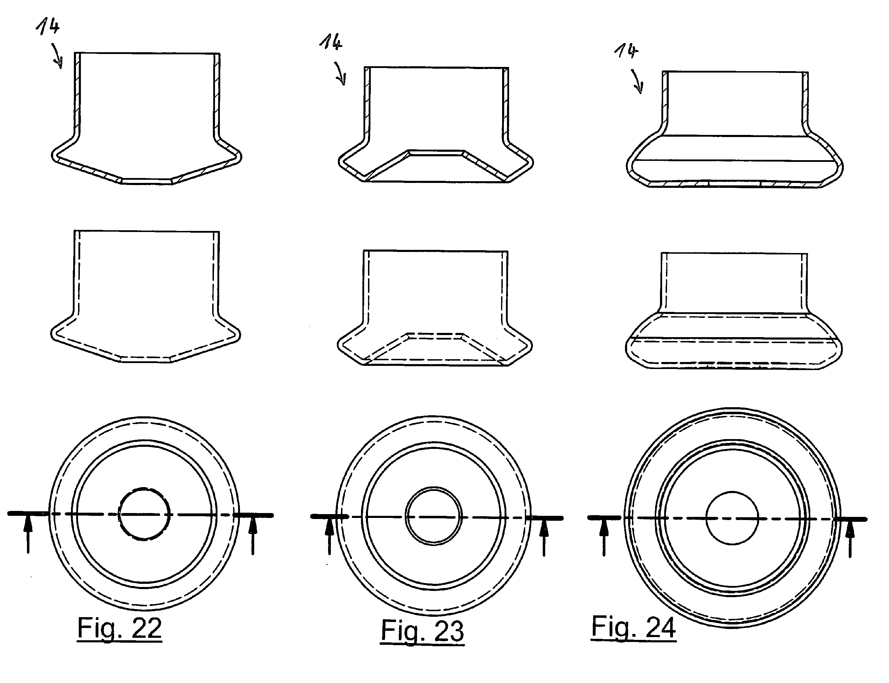

Die Figuren 22 bis 24 zeigen drei weitere Beispiele für eine Hülse 14, die aufgrund Ihrer Geometrie in der Lage ist, bei Belastung des auch hier nicht eingezeichneten Mediums federnd zu wirken und sich bei Wegfall der Belastung in ihre Ausgangsform zurückzustellen. Dabei ist in den Figuren 22 bis 24 die Hülse 14 jeweils oben im Längsschnitt, in der Mitte in Seitenansicht und unten in Draufsicht gezeigt.

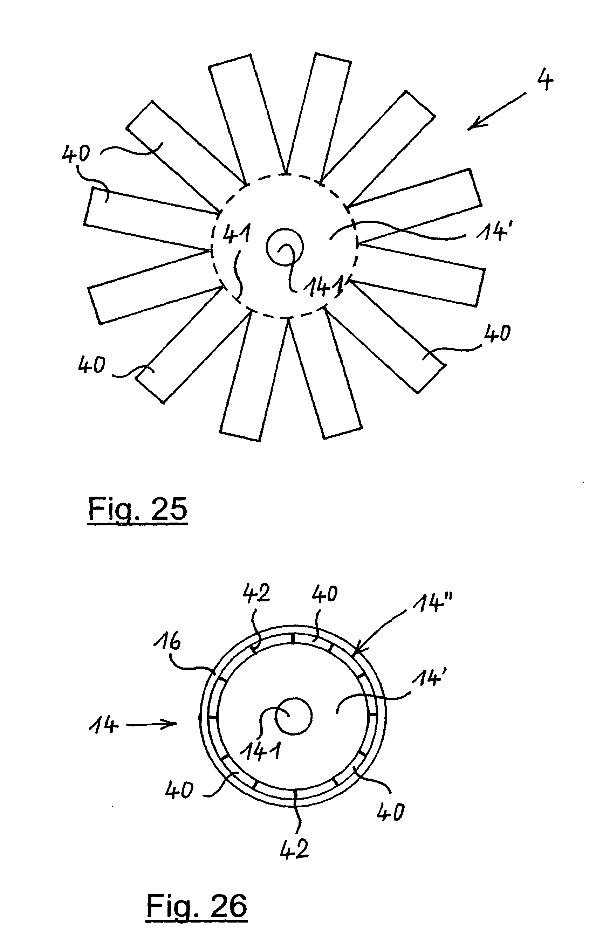

Figur 25 zeigt eine sternförmige Platine 4 als Ausgangsmaterial zur Herstellung einer Hülse. Die Platine 4 besitzt einen kreisrunden Boden 14' mit einer zentralen Durchbrechung 141. Vom äußeren Rand des Bodens 14' gehen mehrere, hier insgesamt zwölf schmale, rechteckige Arme 40 aus. Die Platine 4 kann beispielsweise mittels eines Stanz- oder Feinschneidprozesses aus einer Blechplatte hergestellt sein.

Zur Bildung der fertigen Hülse gemäß Figur 26 sind die Arme 40 um die entlang des Umfangs des Bodens 14' verlaufende Biegelinie 41 rechtwinklig nach oben gebogen, wodurch sich dann in Draufsicht gesehen die in Figur 26 dargestellte Form der Hülse 14 ergibt. Die freien Enden der Arme 40 weisen nun nach oben und die Längsseiten der Arme 40 liegen aneinander an oder bilden miteinander schmale Trennschlitze 4. Insgesamt bilden die Arme 40 eine Hülsenumfangswand 14". Außen um die Hülsenumfangswand 14" ist bei dem Beispiel gemäß Figur 26 ein Haltering 16 gelegt, der hier nahe dem freien Ende der Hülsenumfangswand 14" befestigt ist. Hierdurch wird ein Aufweiten der Hülsenumfangswand 14" an ihrem freien Ende weitestgehend unterbunden, während in dem Bereich zwischen dem Haltering 16 und dem Boden 14' die Hülsenumfangswand 14" in Radialrichtung nach außen eine federnde Beweglichkeit aufweist. Dazu besteht die Hülse 14 aus einem federnden Material, vorzugsweise Federstahl.

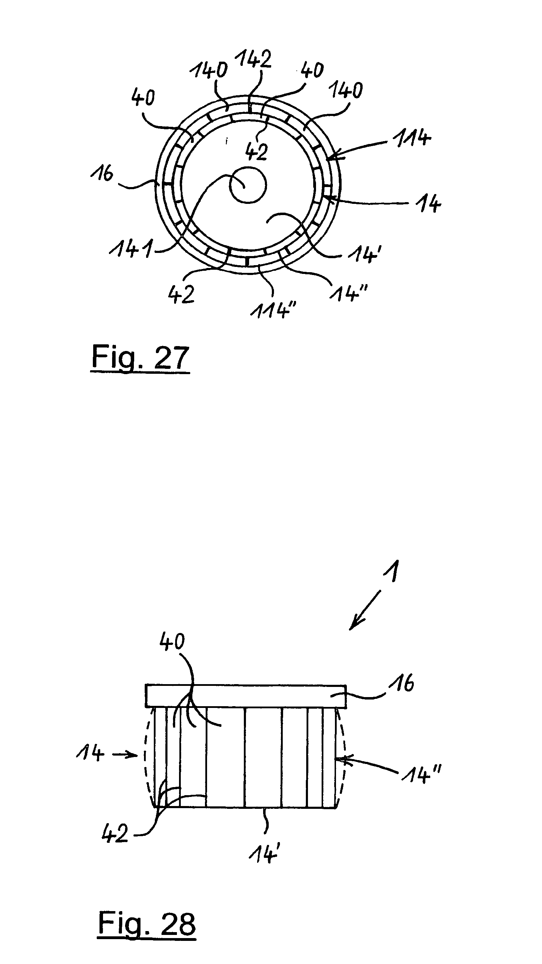

Figur 27 zeigt eine Doppel-Hülse aus zwei konzentrisch ineinander gesetzten Hülsen 14 und 114 in Draufsicht. Im Zentrum ist der Boden 14' der inneren Hülse 14 mit der zentralen Durchbrechung 141 sichtbar. Radial außen von dem Boden 14' erstreckt sich die Hülsenumfangswand 14" nach oben, wobei hier die Hülsenumfangswand 14" ebenfalls aus Armen 40 besteht. Zwischen je zwei benachbarten Armen 40 liegt jeweils ein Trennschlitz 42.

Radial außen von der inneren Hülsenumfangswand 14" verläuft die Hülsenumfangswand 114" der äußeren Hülse 114. Auch die Hülsenumfangswand 114" besteht aus Armen 140, die jeweils zwischen sich je einen Trennschlitz 142 bilden.

Radial außen auf der äußeren Hülsenumfangswand 114" sitzt nahe deren oberem Ende wieder ein Haltering 16, der in diesem Bereich ein Aufweiten der beiden Hülsen 14 und 114 unterbindet, wogegen im Bereich zwischen dem Haltering 16 und dem Boden 14' ein federndes Bewegen der Hülsenumfangswände 14" und 114" radial nach außen möglich ist.

Die Figur 28 veranschaulicht die zuvor erwähnte radiale Beweglichkeit der Hülsenumfangswand 14". Ganz unten in Figur 28 befindet sich der Boden 14' der Hülse 14. Vom Boden 14' gehen die einzelnen Arme 40 nach oben, welche zusammen die Hülsenumfangswand 14" mit den Trennschlitzen 42 bilden. Am oberen Ende der Hülsenumfangswand 14" sitzt auf deren Außenumfang der Haltering 16, der hier in Radialrichtung starr ausgeführt ist. Der Haltering 16 kann auch ein hinsichtlich seines Durchmessers federnder Ring sein.

Durch gestrichelte Linien links und rechts an der Hülse 14 ist angedeutet, wie sich die Hülsenumfangswand 14" bei entsprechender Belastung eines im Inneren der Hülse 14 befindlichen elastisch-flexiblen Mediums nach außen federnd bewegen kann. Diese Bewegung der Hülsenumfangswand 14" spielt sich im elastischen Bereich der Umformung ab, so dass eine Eigenrückstellung der Hülsenumfangswand 14" in ihre in durchgezogene Linien gezeigte Ausgangsform gewährleistet ist.

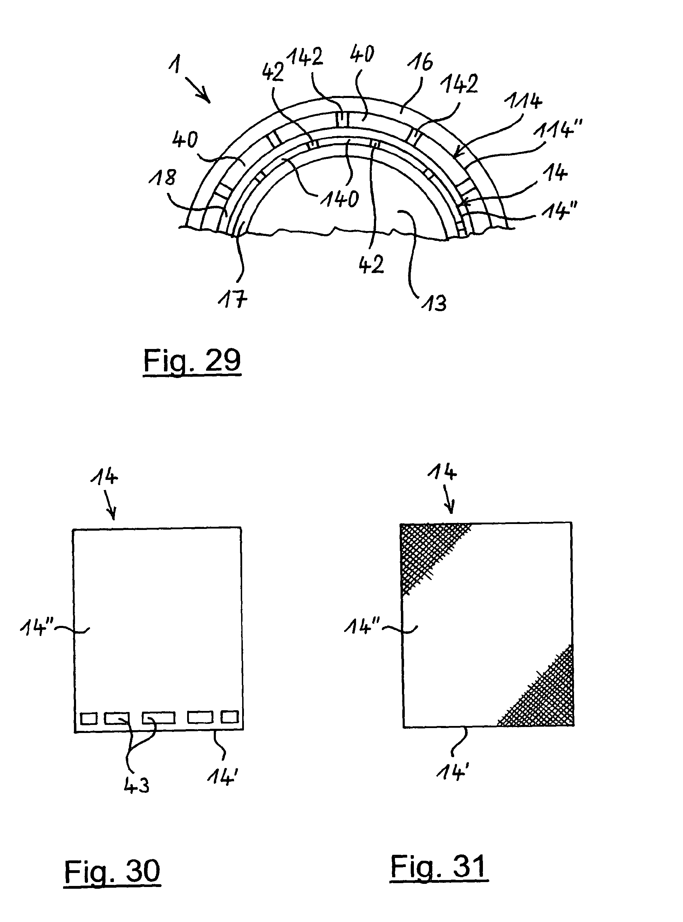

Figur 29 zeigt einen Ausschnitt aus einem Verbindungselement 1 mit einer Doppel-Hülse, wobei die Doppel-Hülse aus zwei konzentrisch ineinander gesetzten Hülsen 14 und 114 besteht. Im Inneren der inneren Hülse 14 ist ein Körper aus einem elastisch-flexiblen Medium 13 angeordnet. Auch hier bestehen die Hülsenumfangswände 14" und 114" aus Armen 40 bzw. 140, die parallel zueinander verlaufen und zwischen sich wieder jeweils einen Trennschlitz 42 bzw. 142 einschließen. Dabei sind hier die Trennschlitze 42 und 142 mit einer größeren Breite ausgeführt als bei den zuvor beschriebenen Beispielen.

Zwischen dem elastisch-flexiblen Medium 13 und der diese umfassenden Hülsenumfangswand 14" ist eine Mediumschutzhülle 17 angeordnet, die dafür sorgt, dass das elastisch flexible Medium 13 nicht in die Trennschlitze 42 gelangt und dort beschädigt wird.

Weiterhin ist zwischen den beiden Hülsenumfangswänden 14" und 114" eine Zwischenlage 18 aus einem elastisch-flexiblen Material angeordnet, um die Relativbewegung der Hülsenumfangswände 14" und 114" zueinander zu erleichtern und um einen Verschleiß durch Reibung der Hülsenumfangswände 14" und 114" aneinander zu vermeiden oder zu vermindern.

Radial außen auf der äußeren Hülsenumfangswand 114" sitzt auch hier wieder ein Haltering 16, der ein radiales Aufweiten der Hülsenumfangswände 14" und 114" verhindert.

Figur 30 zeigt in einer Seitenansicht eine weitere Ausführung einer Hülse 14, wobei die Hülse 14 hier eine geschlossene Hülsenumfangswand 14" aufweist. Nahe dem Übergangsbereich von der Hülsenumfangswand 14" zum Boden 14' befinden sich in der Hülsenumfangswand 14" über den Umfang verteilt mehrere Ausschnitte 43. Diese Ausschnitte 43 dienen dazu, das federnde Verhalten der Hülse 14 in gewünschter Weise zu beeinflussen. Neben den Ausschnitten 43 können bei Bedarf selbstverständlich auch Trennschlitze der vorstehend beschriebenen Art vorgesehen sein.

Figur 31 zeigt eine Hülse 14, für die charakteristisch ist, dass ihre Hülsenumfangswand 14" oder die Hülsenumfangswand 14" und der Boden 14' aus einem Fasergewebe, z.B. aus Metall oder Karbon- oder Kunststofffasern oder aus einer Mischung aus zwei oder drei dieser Fasern, besteht. Auch in dieser Ausführung der Hülse 14 kann eine federnde Eigenschaft erzielt werden.

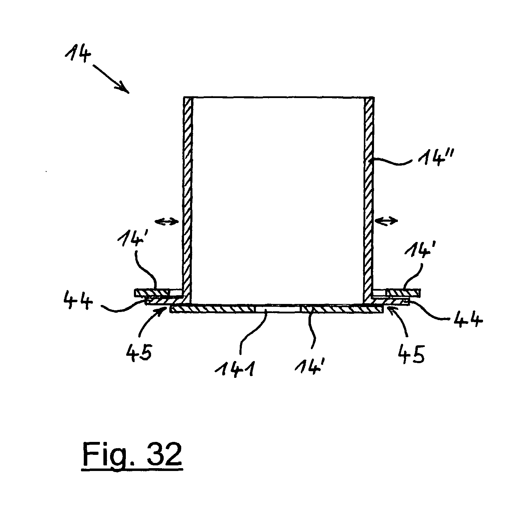

Figur 32 schließlich zeigt eine Ausführung einer Hülse 14, bei der der Boden 14' und die Hülsenumfangswand 14" zwei separate Einzelteile sind. Im Zentrum des Bodens 14' befindet sich auch hier die zentrale Durchbrechung 141. Dabei ist die Hülsenumfangswand 14" so mit dem Boden 14' verbunden, dass in Axialrichtung der Hülse 14 eine feste Verbindung vorliegt, wogegen die Hülsenumfangswand 14" in Radialrichtung gesehen ein Bewegungsspiel relativ zu dem Boden 14' aufweist.

Hierzu ist die Hülsenumfangswand 14" im Wesentlichen zylindrisch ausgeführt und besitzt an ihrem unteren Stirnende zwei einander diametral gegenüberliegende, radial nach außen weisende flache Laschen 44. Diese Laschen 44 greifen in lagegerecht angeordnete Führungsschlitze 45 ein, die an dem Boden 14' ausgebildet sind. Somit kann die Hülsenumfangswand 14" sich in Richtung der neben der Hülsenumfangswand 14" eingezeichneten Doppelpfeile relativ zu dem Boden 14" in Radialrichtung nach außen und innen bewegen, also ihren Durchmesser vergrößern und verkleinern. In Axialrichtung ist praktisch keine Bewegung der Hülsenumfangswand 14" relativ zu dem Boden 14' möglich.

## Patentansprüche

1. Verbindungselement (1) für eine elastische Verbindung zweier Bauteile (2, 3) mit zwei einander gegenüberliegenden Bauteilbereichen (20, 30) miteinander, wobei diese mittels eines Befestigungselements (10) miteinander verbindbar sind, und mit wenigstens einem das Befestigungselement (10) auf einem Teil seiner Länge umgebenden, zwischen einem Kopf (10') des Befestigungselements (10) und dem diesem zugewandten Bauteilbereich (20) angeordneten elastischen Zwischenglied, das ein aus einem elastisch-flexiblen, festen Material bestehendes Medium (13) ist, das von wenigstens einer Umhüllung in seiner Axialrichtung eingeschlossen oder vorgespannt und an seinem Außenumfang umgeben ist, wobei im montierten Zustand des Verbindungselements (1) durch auftretende Kräfte, die die beiden Bauteile (2, 3) relativ zueinander bewegen, das Medium (13) unter Bewegungsdämpfung in seiner Axialrichtung stauchbar und/oder in seiner Radialrichtung nach außen ausdehnbar ist,
**dadurch gekennzeichnet,**
**dass** die Umhüllung aus elastisch-flexiblem Material und federnden Geometrien besteht und dass durch eine auf das feste, elastische Medium (13) ausgeübte axiale Druckkraft, die eine Umformung des Mediums (13) bewirkt, die umhüllenden Geometrien rückstellbar federnd verformbar sind.

2. Verbindungselement nach Anspruch 1, **dadurch gekennzeichnet, dass** die Umhüllung umfangsseitig aus einer Hülse (14) und stirnseitig aus einer Scheibe (12) besteht, wobei vorzugsweise die Hülse (14) mit einem festen oder losen Boden (14') mit einer Durchbrechung für das Befestigungselement (10) ausgeführt ist.

3. Verbindungselement nach Anspruch 2, **dadurch gekennzeichnet, dass** die Hülse (14) in entspanntem Zustand des Mediums (13) dessen Außenumfang unter Freilassung eines Luftspalts (15) umgibt.

4. Verbindungselement nach Anspruch 2 oder 3, **dadurch gekennzeichnet, dass** die Hülse (14) in unbelastetem Zustand in ihrer Umfangrichtung gesehen zumindest über einen Teil ihrer axialen Länge einen nicht-kreisförmigen Umriss aufweist.

5. Verbindungselement nach Anspruch 4, **dadurch gekennzeichnet, dass** die Hülse (14) und/oder Boden (14') der Hülse (14) und/oder die Scheibe (12) in unbelastetem Zustand in ihrer Umfangrichtung und/oder in ihrer Axialrichtung gesehen einen ovalen oder elliptischen oder runden oder eckigen oder mehreckigen oder eingebeulten symmetrischen oder unsymmetrischen Umriss aufweist.

6. Verbindungselement nach einem der Ansprüche 2 bis 5, **dadurch gekennzeichnet, dass** im oder am Medium (13) und/oder in dem Inneren der Hülse (14) zwischen Boden (14') und Scheibe (14) ein oder mehrere federnde Elemente angeordnet sind.

7. Verbindungselement nach einem der Ansprüche 2 bis 6, **dadurch gekennzeichnet, dass** die Hülse (14) und/oder die Scheibe (12) und/oder ein oder mehrere Elemente im Inneren der Hülse (14) aus Federstahl bestehen, insbesondere aus einem Stahl nach DIN EN 10888-2 oder 10089 oder 10132-1 oder 10132-4 oder aus einem Stahl der Bezeichnung X10CrNi18-8 oder 38Si7 oder 61 SiCr7 oder 52CrMoV4 oder 51 CrV4.

8. Verbindungselement nach einem der Ansprüche 1 bis 7, **dadurch gekennzeichnet, dass** die umhüllenden Geometrien ein oder mehrere Lücken und/oder Löcher und/oder Schlitze und/oder Freiräume und/oder ein oder mehrere Aussparungen oder Ausschnitte (43) haben und/oder ganz oder zum Teil aus Fasergewebe gebildet sind.

9. Verbindungselement nach einem der Ansprüche 2 bis 8, **dadurch gekennzeichnet, dass** zwei oder mehr Hülsen (14 und 114) mit ein oder mehreren oder ohne Zwischenlagen (18) und/oder Mediumschutzhüllen (17) ineinander angeordnet sind.

10. Verbindungselement nach Anspruch 9, **dadurch gekennzeichnet, dass** eine oder mehrere die Umhüllungsgeometrie bildende Hülsenumfangswände (14", 114") mindestens einen in Axialrichtung oder/und Radialrichtung des Verbindungselements (1) laufenden Trennschlitz (42, 142) aufweisen und/oder überlappende Konturen aufweisen.

11. Verbindungselement nach Anspruch 10, **dadurch gekennzeichnet, dass** auf den Außenumfang der Hülsenumfangswand (14", 114") mindestens ein fester und/oder federnder Haltering (16) aufgesetzt ist.

12. Verbindungselement nach Anspruch 10 oder 11, **dadurch gekennzeichnet, dass** mindestens ein Haltering (16) in Axialrichtung der Hülse (14, 114) fest oder verstellbar an der Hülsenumfangswand (14", 114") angebracht ist.

13. Verbindungselement nach einem der Ansprüche 1 bis 12, **dadurch gekennzeichnet, dass** es eine elastische Verbindung eines Fahrzeugaufbaus mit einem Fahrgestell bildet.

## Claims

1. A connecting element (1) for an elastic connection of two construction components (2, 3), comprising two construction element sections (20, 30) that are arranged opposite to each other, wherein said sections are connected to each other by means of a mounting element (10), and comprising at least one elastic intermediate member that encloses the mounting element (10) along a part of its length and is arranged between a head (10') of the mounting element (10) and the construction element section (20) that faces said mounting element (10), wherein the elastic intermediate member is a medium (13) that is made of an elastically flexible, solid material, with at least one envelope confining or prestressing said medium (13) in its axial direction and enclosing said medium (13) on its outer circumference, wherein, under absorption of motion, the medium (13) can be compressed in its axial direction and/or can be extended outward in its radial direction, this being achieved by forces occurring when the connecting element (1) is in its mounted state and moving the two construction components (2, 3) in relation to each other,
**characterized in that**
the envelope is made of an elastically flexible material and resilient geometries and that the enveloping geometries can be deformed in a recovering resilient manner, this being achieved by an axial compressive force that is exerted on the solid, elastic medium (13) and causes a deformation of the medium (13).

2. The connecting element according to Claim 1, **characterized in that** the envelope consists of a shell (14) on its circumferential side and of a disc (12) on its front side wherein, preferrably, the shell (14) is formed with an attached or detached bottom (14') having a through hole for the mounting element (10).

3. The connecting element according to Claim 2, **characterized in that**, when the medium (13) is in its relaxed state, the shell (14) encloses the outer circumference of said medium (13) such that an air gap (15) is left open.

4. The connecting element according to Claim 2 or 3, **characterized in that**, in the unstressed state, the shell (14) comprises a non-circular outline, as seen in its circumferential direction, at least along a part of its axial length.

5. The connecting element according to Claim 4, **characterized in that**, in the unstressed state, the shell (14) and/or the bottom (14') of the shell (14) and/or the disc (12) comprises an oval or elliptical or round or angular or polygonal or indented symmetrical or unsymmetrical outline, as seen in its circumferential direction and/or in its axial direction.

6. The connecting element according to any one of Claims 2 to 5, **characterized in that** one or a plurality of resilient elements are arranged in or on the medium (13) and/or in the interior region of the shell (14) between the bottom (14') and the disc (14).

7. The connecting element according to any one of Claims 2 to 6, **characterized in that** the shell (14) and/or the disc (12) and/or one or a plurality of elements in the interior region of the shell (14) consist of spring steel, more particularly of a steel according to DIN EN 10888-2 or 10089 or 10132-1 or 10132-4 or of a steel with designation X10CrNi18-8 or 38Si7 or 61SiCr7 or 52CrMoV4 or 51 CrV4.

8. The connecting element according to any one of Claims 1 to 7, **characterized in that** the enveloping geometries have one or a plurality of gaps and/or holes and/or slots and/or clearances and/or one or a plurality of recesses or cutouts (43) and/or are formed from woven fabric either as a whole or in part.

9. The connecting element according to any one of Claims 2 to 8, **characterized in that** two or more shells (14 and 114) are arranged in each other with one or a plurality of or without intermediate layers (18) and/or medium protective coverings (17).

10. The connecting element according to Claim 9, **characterized in that** one or a plurality of circumferential shell walls (14", 114") that are forming the enveloping geometry comprise at least one separating slot (42, 142) extending in the axial direction and/or radial direction of the connecting element (1) and/or comprise overlapping contours.

11. The connecting element according to Claim 10, **characterized in that** at least one solid and/or resilient retaining ring (16) is attached onto the outer circumference of the circumferential shell wall (14", 114").

12. The connecting element according to Claim 10 or 11, **characterized in that** at least one retaining ring (16) is permanently or variably mounted to the circumferential shell wall (14", 114") in the axial direction of the shell (14, 114).

13. The connecting element according to any one of Claims 1 to 12, **characterized in that** it forms an elastic connection of a body of a vehicle to a chassis frame.

## Revendications

1. Élément d'assemblage (1) pour un assemblage élastique entre deux composants de construction (2, 3) avec deux zones de composant de construction (20, 30) qui se font face, celles-ci pouvant être reliées entre elles au moyen d'un élément de fixation (10), et avec au moins un élément intermédiaire élastique qui entoure l'élément de fixation (10) sur une partie de sa longueur et est situé entre une tête (10') de l'élément de fixation (10) et la zone du composant de construction (20) qui lui fait face, lequel élément intermédiaire élastique est un milieu (13) composé d'une matière solide élastique flexible qui est entouré ou précontraint par au moins une enveloppe dans son sens axial et en est entouré sur son pourtour extérieur, le milieu (13), lorsque l'élément de liaison (1) est monté, pouvant, du fait de la survenance de forces qui déplacent les deux composants de construction (2, 3) l'un par rapport à l'autre, être comprimé avec amortissement du mouvement dans son sens axial et/ou allongé vers l'extérieur dans son sens radial,
**caractérisé en ce que**
l'enveloppe est constituée d'une matière élastique flexible et de géométries élastiques et **en ce que** les géométries enveloppantes peuvent subir une déformation élastique réversible du fait d'une force de pression axiale exercée sur le milieu élastique solide (13) qui provoque une déformation dudit milieu (13).

2. Élément d'assemblage selon la revendication 1, **caractérisé en ce que** l'enveloppe se compose d'un manchon (14) du côté du pourtour et d'un disque (12) du côté frontal, le manchon (14) étant réalisé de préférence avec un fond fixe ou mobile (14') avec une ouverture pour l'élément de fixation (10).

3. Élément d'assemblage selon la revendication 2, **caractérisé en ce que** le manchon (14), lorsque le milieu (13) est détendu, entoure le pourtour extérieur de celui-ci tout en laissant libre une fente d'air (15).

4. Élément d'assemblage selon la revendication 2 ou 3, **caractérisé en ce que** le manchon (14), lorsqu'il n'est pas contraint, présente, vu dans le sens de son pourtour, un contour non circulaire au moins sur une partie de sa longueur axiale.

5. Élément d'assemblage selon la revendication 4, **caractérisé en ce que** le manchon (14) et/ou le fond (14') du manchon (14) et/ou le disque (12), à l'état non contraint, présentent, vus dans le sens de leur pourtour et/ou dans leur sens axial, un contour ovale ou elliptique ou circulaire ou angulaire ou polygonal ou symétrique bosselé ou non symétrique bosselé.

6. Élément d'assemblage selon l'une des revendications 2 à 5, **caractérisé en ce qu'**un ou plusieurs éléments élastiques sont situés dans ou sur le milieu (13) et/ou dans l'intérieur du manchon (14) entre le fond (14') et le disque (14).

7. Élément d'assemblage selon l'une des revendications 2 à 6, **caractérisé en ce que** le manchon (14) et/ou le disque (12) et/ou un ou plusieurs éléments à l'intérieur du manchon (14) se composent d'acier pour ressorts, et plus particulièrement d'un acier selon DIN EN 10888-2 ou 10089 ou 10132-1 ou 10132-4 ou d'un acier portant la désignation X10CrNi18-8 ou 38Si7 ou 61 SiCr7 ou 52CrMoV4 ou 51 CrV4.

8. Élément d'assemblage selon l'une des revendications 1 à 7, **caractérisé en ce que** les géométries enveloppantes présentent un ou plusieurs interstices et/ou trous et/ou fentes et/ou espaces libres et/ou un ou plusieurs évidements ou découpes (43) et/ou sont constitués, en tout ou partie, de tissu de fibres.

9. Élément d'assemblage selon l'une des revendications 2 à 8, **caractérisé en ce que** deux ou plusieurs manchons (14 et 114) sont agencés l'un dans l'autre avec un ou plusieurs ou sans couches intermédiaires (18) et/ou manchons de protection du milieu (17).

10. Élément d'assemblage selon la revendication 9, **caractérisé en ce qu'**une ou plusieurs parois périphériques de manchon (14", 114") constituant la géométrie enveloppante comportent au moins une fente de séparation (42, 142) dans le sens axial et/ou dans le sens radial de l'élément d'assemblage (1) et/ou présentent des contours chevauchants.

11. Élément d'assemblage selon la revendication 10, **caractérisé en ce qu'**est posée, sur le pourtour extérieur de la paroi périphérique de manchon (14", 114"), au moins une bague de retenue (16) fixe et/ou élastique.

12. Élément d'assemblage selon la revendication 10 ou 11, **caractérisé en ce qu'**au moins une bague de retenue (16) est montée, dans le sens axial du manchon (14, 114), de manière fixe ou déplaçable sur la paroi périphérique de manchon (14", 114").

13. Élément d'assemblage selon l'une des revendications 1 à 12, **caractérisé en ce qu'**il constitue un assemblage élastique entre une superstructure de véhicule et un châssis de véhicule.
